(19) **Europäisches Patentamt**
**European Patent Office**
**Office européen des brevets**

(11) **EP 4 029 695 A1**

(12) **EUROPEAN PATENT APPLICATION**
published in accordance with Art. 153(4) EPC

(43) Date of publication:
**20.07.2022 Bulletin 2022/29**

(21) Application number: **20863451.9**

(22) Date of filing: **22.07.2020**

(51) International Patent Classification (IPC):
**B32B 27/32** (2006.01)    **B32B 27/20** (2006.01)
**C08K 3/18** (2006.01)

(52) Cooperative Patent Classification (CPC):
**B32B 27/20; B32B 27/32; C08K 3/18**

(86) International application number:
**PCT/JP2020/028393**

(87) International publication number:
**WO 2021/049182 (18.03.2021 Gazette 2021/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.09.2019 JP 2019166237**

(71) Applicant: **Sumitomo Chemical Company, Limited
Chuo-ku
Tokyo 103-6020 (JP)**

(72) Inventors:
• **YODA, Hiroaki
  Tokyo 1036020 (JP)**
• **IGAWA, Nao
  Ichihara-shi, Chiba 299-0195 (JP)**

(74) Representative: **Global IP Europe
Patentanwaltskanzlei
Pfarrstraße 14
80538 München (DE)**

(54) **LAMINATED FILM, AND PRODUCTION METHOD THEREFOR**

(57)    Provided is a laminated film for easy material recycling and with excellent rigidity and thermal shrinkage resistance. The laminated film includes, in sequence, a layer A containing an ethylene polymer (A) containing 80 mol% or more of a structural unit derived from ethylene, a layer B containing an ethylene polymer (B) containing 70 mol% or more of a structural unit derived from ethylene and an inorganic filler, a layer C containing an ethylene polymer (C) containing 70 mol% or more of a structural unit derived from ethylene, at least one layer selected from the group consisting of a barrier layer and an adhesive layer, and a layer D containing an ethylene polymer (D) containing 70 mol% or more of a structural unit derived from ethylene.

EP 4 029 695 A1

**Description**

TECHNICAL FIELD

The present invention relates to a laminated film and a method for producing the same.

BACKGROUND ART

In May 2019, the "Plastic Resource Circulation Strategy" was formulated by Ministry of the Environment, Japan, and it was stipulated that used plastics should be effectively utilized by 100% reuse and recycling by 2035. Under such a social situation, the demand for resin packaging materials suitable for material recycling is expected to further increase.
For example, a plastic (resin) film is frequently used as a laminated film with a plurality of layers having various functions. Examples of such a resin film include a single-use resin packaging material. As an example, the resin packaging material is formed by laminating a base layer formed of a resin film such as an oriented nylon film and a polyethylene terephthalate (PET) film, and a metal film such as aluminum; and a sealant layer including a polyethylene film and the like. Here, the base film and the sealant film can be laminated with an adhesive or the like interposed therebetween.
For example, Patent Document 1 describes a multilayer structured film including a biaxially oriented polyethylene film containing linear low-density polyethylene with a predetermined density; an adhesive layer; and a sealant film, in which the biaxially oriented polyethylene film has an ultimate tensile strength of at least 60 MPa in at least one of a longitudinal direction and a lateral direction, and the sealant film has an ultimate elongation of at least 300%, and the ultimate tensile strength of less than 50 MPa in at least one of the longitudinal direction and the lateral direction.

PRIOR ART DOCUMENTS

PATENT DOCUMENTS

Patent Document 1: JP-A-2018-520908

SUMMARY OF THE INVENTION

PROBLEMS TO BE SOLVED BY THE INVENTION

For material recycling, a laminated film with a base layer formed from a resin such as nylon and polyethylene terephthalate (PET) and a sealant layer formed from a polyethylene resin and the like has a problem that it is difficult to separate and recover resins constituting the respective layers.
With respect to the above problem, in the laminated film described in Patent Document 1, the base layer and the sealant layer are formed from a polyethylene-based resin, but when a resin film such as polyethylene terephthalate is not laminated, the laminated film has a problem that the rigidity and thermal shrinkage resistance do not sufficiently satisfy the level required for a packaging material.
The present invention has been made in view of the above problems, and an object of the present invention is to provide a laminated film for easy material recycling and with excellent rigidity and thermal shrinkage resistance, and a related technique thereof.

MEANS FOR SOLVING THE PROBLEMS

As a result of intensive studies on the above problems, the present inventors have found that, by laminating a layer containing an ethylene polymer and a layer containing an ethylene polymer and an inorganic filler, the laminated film exhibits favorable rigidity and thermal shrinkage resistance as a packaging material although being a mono-material film with a polyethylene resin as a main component, thus completing the present invention.
A laminated film according to one aspect of the present invention is formed by sequentially laminating a layer A containing an ethylene polymer (A) containing 80 mol% or more of a structural unit derived from ethylene, a layer B containing an ethylene polymer (B) containing 70 mol% or more of a structural unit derived from ethylene and an inorganic filler, a layer C containing an ethylene polymer (C) containing 70 mol% or more of a structural unit derived from ethylene, one or more layers selected from the group consisting of a barrier layer and an adhesive layer, and a layer D containing an ethylene polymer (D) containing 70 mol% or more of a structural unit derived from ethylene.
In addition, a laminated film according to one aspect of the present invention is formed by sequentially laminating a layer A containing an ethylene polymer (A) containing 80 mol% or more of a structural unit derived from ethylene, a layer B containing an ethylene polymer (B) containing 70 mol% or more of a structural unit derived from ethylene and an inorganic filler, and a layer C containing an ethylene polymer (C) containing 70 mol% or more of a structural unit derived from ethylene.

In addition, a laminated film according to one aspect of the present invention is formed by laminating a layer A' that contains an ethylene-α-olefin copolymer (A') containing 80 mol% or more of a structural unit derived from ethylene and having a density of 930 kg/m³ to 970 kg/m³, and a melt flow rate of 0.01 g/10 min or more and less than 3 g/10 min as measured at a temperature of 190°C and a load of 21.18 N; and a layer B' that contains an ethylene-α-olefin copolymer (B') and an inorganic filler, the ethylene-α-olefin copolymer (B') containing 70 mol% or more of a structural unit derived from ethylene, and having a density of 930 kg/m³ to 970 kg/m³, and a melt flow rate of 3 g/10 min to 25 g/10 min as measured at a temperature of 190°C and a load of 21.18 N, and that has a content of the ethylene-α-olefin copolymer (B') of 20 wt% to 60 wt% and a content of the inorganic filler of 40 wt% to 80 wt% with respect to a total content of the ethylene-α-olefin copolymer (B') and the inorganic filler of 100 wt%.

EFFECT OF THE INVENTION

According to one aspect of the present invention, it is possible to provide a laminated film for easy material recycling and with excellent rigidity and thermal shrinkage resistance, and a related technique thereof.

MODE FOR CARRYING OUT THE INVENTION

An embodiment of the present invention will be described below, but the present invention is not limited thereto. The present invention is not limited to configurations described below, and various modifications can be made within the scope shown in the claims, and embodiments and examples obtained by appropriately combining technical means disclosed in different embodiments and examples respectively are also included in the technical scope of the present invention. In addition, in the present specification, "A to B" representing a numerical range means "A or more and B or less" unless otherwise specified.

Hereinafter, aspects included in the present invention will be described in detail.

<Laminated Film>

A laminated film according to one aspect of the present invention is formed by sequentially laminating a layer A containing an ethylene polymer (A), a layer B containing an ethylene polymer (B) and an inorganic filler, a layer C containing an ethylene polymer (C), and one or more layers selected from the group consisting of a barrier layer and an adhesive layer, and a layer D containing an ethylene polymer (D). In the laminated film according to one aspect of the present invention, a layer formed by sequentially laminating the layer A, the layer B, and the layer C can be a base layer. Here, the film that forms the base layer may be referred to as a base film. In addition, the layer D containing the ethylene polymer (D) can be a so-called sealant layer. Here, the film that forms the sealant layer may be referred to as a sealant film. That is, the laminated film according to one aspect of the present invention can be a laminated film formed by laminating the layer C in the base layer formed by sequentially laminating the layer A, the layer B, and the layer C; and the sealant layer containing the layer D, with one layer selected from the group consisting of the barrier layer and the adhesive layer interposed between the layer C and the sealant layer.

[Base Film (Base Layer)]

The base film is a layer formed by sequentially laminating the layer A containing the ethylene polymer (A), the layer B containing the ethylene polymer (B) and an inorganic filler, and the layer C containing the ethylene polymer (C), and the layer A can be an outer layer, the layer B can be an intermediate layer, and the layer C can be an inner layer. The ethylene polymer (A), the ethylene polymer (B), and the ethylene polymer (C) can be each selected according to the mole fraction of monomer units derived from ethylene, the density, and the melt flow rate (MFR) of ethylene polymers. The base film contains an inorganic filler at least in the layer B. In addition, each of the layer A, the layer B, and the layer C constituting the base film may contain an additive as necessary.

[1] Ethylene Polymer

[1-1] Mole Fraction of Monomer Unit Derived from Ethylene

The ethylene polymer (A) contained in the layer A contains 80 mol% or more, preferably 97 mol% or more, more preferably 98 mol% or more, and still more preferably 99 mol% or more of a structural unit derived from ethylene. The ethylene polymer (A) may be constituted of 100 mol% of a structural unit derived from ethylene. The ethylene polymer (A) contains 80 mol% or more of a structural unit derived from ethylene, thereby producing an effect that high heat-resistance and chemical resistance can be imparted to the film. Additionally, as the ethylene polymer (A) contained in the layer A, two or more ethylene polymers described later may be used in combination. In this case, at least one of two or more ethylene polymers may contain 80 mol% or more of a structural unit derived from ethylene as the ethylene polymer (A). In addition, when the ethylene polymer (A) and an ethylene polymer other than the ethylene polymer (A) are used in combination, the content of the ethylene polymer (A) is preferably 60 wt% or more, and more preferably 80 wt% or more, based on 100 wt% of the total of the ethylene polymer (A) and the ethylene polymer other than the ethylene polymer (A) contained in the layer A. When the content of the ethylene polymer (A) is 90 wt% or more, the layer A can be suitably formed.

The ethylene polymer (B) contained in the layer B contains 70 mol% or more, preferably 97 mol% or more, more preferably 98 mol% or more, and still more preferably 99 mol% or more of a structural unit derived from ethylene. The ethylene polymer (B) may be constituted of 100 mol% of a structural unit derived from ethylene. The ethylene polymer (B) contains 70 mol% or more of a structural unit derived from ethylene, thereby producing an effect that the film formation stability can be enhanced and rigidity can be imparted to the film. Additionally, as the ethylene polymer (B) contained in the layer B, two or more ethylene polymers described later may be used in combination. In this case, at least one of two or more ethylene polymers may contain 70 mol% or more of a structural unit derived from ethylene as the ethylene polymer (B). In addition, when the ethylene polymer (B) and an ethylene polymer other than the ethylene polymer (B) are used in combination, the content of the ethylene polymer (B) is preferably 60 wt% or more, and more preferably 80 wt% or more, based on 100 wt% of the total of the two or more ethylene polymers contained in the layer B. When the content of the ethylene polymer (B) is 90 wt% or more, the layer B can be suitably formed.

The ethylene polymer (C) contained in the layer C contains 70 mol% or more, preferably 97 mol% or more, more preferably 98 mol% or more, and still more preferably 99 mol% or more of a structural unit derived from ethylene. The ethylene polymer (C) may be constituted of 100 mol% of a structural unit derived from ethylene. The ethylene polymer (B) contains 70 mol% or more of a structural unit derived from ethylene, thereby producing an effect that high blocking-resistance can be imparted to the base film. Additionally, as the ethylene polymer (C) contained in the layer C, two or more ethylene polymers described later may be used in combination. In this case, at least one of two or more ethylene polymers may contain 70 mol% or more of a structural unit derived from ethylene as the ethylene polymer (C). In addition, when the ethylene polymer (C) and an ethylene polymer other than the ethylene polymer (C) are used in combination, the content of the ethylene polymer (C) is preferably 60 wt% or more, and more preferably 80 wt% or more, based on 100 wt% of the total of the two or more ethylene polymers contained in the layer C. When the content of the ethylene polymer (C) is 90 wt% or more, the layer C can be suitably formed.

The ethylene polymer (A) contained in the layer A contains 80 mol% or more of a structural unit derived from ethylene, the ethylene polymer (B) contained in the layer B contains 70 mol% or more of a structural unit derived from ethylene, and the ethylene polymer (C) contained in the layer C contains 70 mol% or more of a structural unit derived from ethylene. Thus, in the base film, while functions as an outer layer, intermediate layer, and inner layer are imparted to the layer A, layer B, and layer C, respectively, the ethylene polymer (A), ethylene polymer (B), and ethylene polymer (C) can be suitably compatibilized when the base film is melt-kneaded after use. Therefore, a base film formed by sequentially laminating a layer A containing the ethylene polymer (A) containing 80 mol% or more of a structural unit derived from ethylene, a layer B containing the ethylene polymer (B) containing 70 mol% or more of a structural unit derived from ethylene and an inorganic filler, and a layer C containing an ethylene polymer (C) containing 70 mol% or more of a structural unit derived from ethylene is also a category of the laminated film according to one aspect of the present invention.

[1-2] Density of Ethylene Polymer

The density of an ethylene polymer is measured according to Method A described in JIS K7112-1980 after performing an annealing treatment defined in JIS K6760-1995.

The density of the ethylene polymer (A) contained in the layer A is preferably 930 kg/m$^3$ or more, and more preferably 935 kg/m$^3$ or more, from the viewpoint of enhancing the rigidity of the film. The density of the ethylene polymer (A) is also preferably 970 kg/m$^3$ or less, and more preferably 940 kg/m$^3$ or less, from the viewpoint that the ethylene polymer (A) is to be reused together with the ethylene polymer (C) contained in the layer C.

The density of the ethylene polymer (B) contained in the layer B is preferably 930 kg/m$^3$ or more, and more preferably 935 kg/m$^3$ or more, from the viewpoint of enhancing the rigidity of the film. The density of the ethylene polymer (B) is also preferably 970 kg/m$^3$ or less, and more preferably 960 kg/m$^3$ or less, from the viewpoint of enhancing the filler acceptability to the layer B and enhancing the processing stability of the film.

The density of the ethylene polymer (C) contained in the layer C is preferably 880 kg/m$^3$ or more, more preferably 890 kg/m$^3$ or more, and still more preferably 895 kg/m$^3$ or more, and preferably less than 930 kg/m$^3$, from the viewpoint of the rigidity, handleability, transparency, and impact strength of the film, and from the viewpoint of the ethylene polymer (C) to be suitably reused together with the ethylene polymer (A) and the ethylene polymer (B).

[1-3] Melt Flow Rate of Ethylene Polymer

The melt flow rate (MFR) of the ethylene polymer (A), the ethylene polymer (B), or the ethylene polymer (C) is measured at a temperature of 190°C and a load of 21.18 N in accordance with JIS K7210-1-2014.
The melt flow rate (MFR) of the ethylene polymer (A) is preferably 0.01 g/10 min or more, and more preferably 0.1 g/10 min or more, from the viewpoint of the fish-eyes, fluidity, appearance of the film surface, stickiness, and the like. The melt flow rate (MFR) of the ethylene polymer (A) is also preferably less than 3 g/10 min and more preferably less than 2 g/10 min from the viewpoint of enhancing the strength of the film.
The MFR of the ethylene polymer (B) is preferably 3 g/10 min or more, and more preferably 4 g/10 min or more, from the viewpoint of the fish-eyes, fluidity, appearance of the film surface, stickiness, and the like. The MFR of the ethylene polymer (B) is also preferably less than 25 g/10 min, and more preferably less than 15 g/10 min, from the viewpoint of allowing the ethylene polymer (B) to contain 20 wt% to 80 wt% or more of the inorganic filler and enhancing the strength of the film.
The MFR of the ethylene polymer (C) is preferably 0.01 g/10 min or more, more preferably 0.1 g/10 min or more, and still more preferably 0.5 g/10 min or more, and also, preferably less than 3 g/10 min, more preferably 2.5 g/10 min or less, and still more preferably 2 g/10 min or less, from the viewpoint of suitable adjustment of an extrusion load in film shaping and enhancement of film strength.

[1-4] Type of Ethylene Polymer

For each of the ethylene polymer (A), the ethylene polymer (B), and the ethylene polymer (C), an ethylene polymer can be used, such as high-pressure low-density polyethylene, high-density polyethylene, an ethylene-α-olefin copolymer, an ethylene-vinyl ester copolymer, or an ethylene-unsaturated carboxylic ester copolymer.
Among the ethylene polymers, for the ethylene polymer (A), an ethylene-α-olefin copolymer, high-pressure low-density polyethylene, or high-density polyethylene is suitably used, and an ethylene-α-olefin copolymer or high-density polyethylene is more suitably used.
For the ethylene polymer (B), an ethylene-α-olefin copolymer or high-density polyethylene is suitably used, and an ethylene-α-olefin copolymer is more suitably used.
For the ethylene polymer (C), high-pressure low-density polyethylene, high-density polyethylene, or an ethylene-α-olefin copolymer is suitably used, and an ethylene-α-olefin copolymer is more suitably used.
When the ethylene polymer is an ethylene-α-olefin copolymer, examples of an α-olefin having 3 to 20 carbon atoms used as a constituent unit of the ethylene-α-olefin copolymer include propylene, 1-butene, 1-pentene, 1-hexene, 1-heptene, 1-octene, 1-nonene, 1-decene, 1-dodecene, 4-methyl-1-pentene, and 4-methyl-1-hexene, and these may be used alone or in combination of two or more thereof. The α-olefin is preferably 1-butene and 1-hexene.
Examples of the ethylene-α-olefin copolymer include an ethylene-propylene copolymer, an ethylene-1-butene copolymer, an ethylene -1-hexene copolymer, an ethylene-1-octene copolymer, an ethylene-1-butene-1-hexene copolymer, and an ethylene-1-butene-1-octene copolymer, and these may be used alone or in combination of two or more thereof. In addition, the ethylene-α-olefin copolymer is preferably an ethylene-1-butene copolymer, an ethylene-1-hexene copolymer, and an ethylene-1-butene-1-hexene copolymer.
Examples of a method for producing the ethylene-α-olefin copolymer include a production method using a known radical polymerization catalyst or ionic polymerization catalyst by a known polymerization method. Examples of the known catalyst include a peroxide catalyst, a Ziegler-Natta type catalyst, and a metallocene type catalyst, and examples of the known polymerization method include a solution polymerization method, a slurry polymerization method, a high-pressure ionic polymerization method, a high-pressure radical polymerization method, and a gas phase polymerization method.
Examples of the Ziegler-Natta type catalyst include a catalyst including a solid catalyst component for olefin polymerization containing a titanium atom, magnesium atom, and halogen atom, and an organometallic compound, and more specific examples thereof include a catalyst described in JP-A-11-322833.
Examples of the metallocene type catalyst include the following catalysts (1) to (4).

(1) A catalyst including a component containing a transition metal compound having a group having a cyclopentadiene type backbone and a component containing an alumoxane compound.
(2) A catalyst including a component containing the transition metal compound and a component containing an ionic compound such as tritylborate or anilinium borate.
(3) A catalyst including a component containing the transition metal compound, a component containing the ionic compound, and a component containing an organometallic compound.

(4) A catalyst obtained by supporting or impregnating each of the above-described components on or into an inorganic particulate carrier of $SiO_2$, $Al_2O_3$, or the like, or a particulate polymer carrier of a polymer of olefin such as ethylene or styrene.

Examples of the organometallic compound include butyllithium and triethylaluminum.

The ethylene-$\alpha$-olefin copolymer is preferably an ethylene-$\alpha$-olefin copolymer produced by a gas phase polymerization method using a metallocene type catalyst. Specific examples of such an ethylene-$\alpha$-olefin copolymer can include an ethyne-$\alpha$-olefin copolymer described in JP-A-9-183816.

When the ethylene polymer is high-density polyethylene, examples of a production method thereof include a production method in which ethylene and an $\alpha$-olefin having 3 to 12 carbon atoms are polymerized using a known catalyst by a known polymerization method. Examples of the known catalyst include a Ziegler-Natta type catalyst, and examples of the known polymerization method include a gas phase-solid phase polymerization method, a liquid phase-solid phase polymerization method, and a homogeneous liquid-phase polymerization method in the presence or absence of a solvent. The polymerization temperature is commonly 30 to 300°C, and the polymerization pressure is commonly from normal pressure to 3000 kg/cm$^2$.

Further, an ethylene polymer such as a high-pressure low-density polyethylene, an ethylene-vinyl ester copolymer, or an ethylene-unsaturated carboxylic ester copolymer may also be produced by a known production method, and a commercially available product may be used.

[1-5] Inorganic Filler

The base film contains an inorganic filler at least in the layer B. The content of the inorganic filler in the layer B is preferably 20 wt% to 80 wt% and more preferably 30 wt% to 70 wt% with respect to the total content of the ethylene polymer (B) and the inorganic filler of 100 wt%. The content of the inorganic filler in the layer B is 20 wt% or more, whereby high rigidity and high thermal shrinkage resistance can be imparted to the base film and further to the laminated film obtained by laminating the sealant film on the base film, without laminating a film such as a polyethylene terephthalate (PET) film and a polyamide film on the base film. Thereby, when the base film and the laminated film are recycled, it is not necessary to separate the polyethylene terephthalate (PET) film, the polyamide film, and the like. Therefore, the base film and the laminated film can be suitably recycled as a shaping material composition of an ethylene polymer and the inorganic filler. Additionally, when the content of the inorganic filler in the layer B is 80 wt% or less, the layer B can be successfully co-extruded with the layer A and the layer C, and the base film can be successfully shaped.

Additionally, the layer A and the layer C may also contain an inorganic filler. The content of the inorganic filler in the layer A is not limited, but may be less than 20 wt% with respect to the total content of the ethylene aggregate (A) and the inorganic filler of 100 wt%. Similarly, the content of the inorganic filler in the layer C is not limited, but may be less than 20 wt% with respect to the total content of the ethylene aggregate (C) and the inorganic filler of 100 wt%.

Examples of the inorganic filler that can be contained in the layer A, the layer B, and the layer C constituting the base film include calcium carbonate, kaolin, metakaolin, hydrotalcite, mica, talc, and fibrous basic magnesium sulfate particles. Use of the above inorganic fillers can avoid impairment of the transparency of the film. From the viewpoint of further increasing the rigidity of the film, hydrotalcite, talc, and fibrous basic magnesium sulfate particles are preferable. The above inorganic fillers may be used alone or in combination of two or more thereof. In addition, the inorganic filler may be surface-treated with, for example, a coupling agent or the like. Further, the layer A, the layer B, and the layer C may contain a coloring pigment such as titanium oxide and iron oxide as the inorganic filler.

The median diameter (d50) of the inorganic filler is not limited, but is preferably 0.5 to 10 $\mu$m. Here, the median diameter (d50) of the inorganic filler can be measured as a volume-based median diameter by a laser diffraction method.

When the inorganic filler is fibrous basic magnesium sulfate particles, the fibrous basic magnesium sulfate particle preferably has, but not limited to, a fiber length of 8 to 30 $\mu$m and a fiber diameter of 0.5 to 1.0 $\mu$m.

[1-6] Additives

The layer A, the layer B, and the layer C may contain at least one additive as necessary as long as the object and effect of the present invention are not impaired.

Examples of the additive include a lubricant, stabilizer (antioxidant), surfactant, antistatic agent, processability improver, anti-blocking agent, and dye.

Examples of the lubricant include paraffinic waxes such as liquid paraffin, natural paraffin, micro wax, polyethylene wax, chlorinated paraffin, fluorocarbon, and synthetic paraffin; fatty acid waxes such as stearic acid, palmitic acid, myristic acid, behenic acid, and arachidine; aliphatic amide waxes such as aliphatic amide and alkylene bis-fatty acid amide; fatty acid lower alcohol esters such as butyl stearate; esters such as polyhydric alcohol, polyglycol ester, and higher alcohol esters; metal soaps such as zinc stearate, magnesium stearate, calcium stearate, ronozinc; polyhydric alcohols such as fatty alcohol, ethylene glycol, diethylene glycol, and triethylene glycol; partial esters of fatty acid and polyhydric alcohol; and partial esters of fatty acid and polyglycol/polyglycerol, and two or more of the lubricants may be used in combination.

The lubricant is preferably blended in a layer containing the inorganic filler. For example, when blended in the layer B, the lubricant is preferably contained in an amount of 0.2 to 5.0 parts by mass with respect to 100 parts by mass of the total of the ethylene polymer (B) and the inorganic filler.

Examples of the stabilizer include phenol type stabilizers typified by 2,6-di-t-butyl-p-cresol (BHT), tetrakis[methylene-3-(3,5-di-t-butyl-4-hydroxyphenyl)propionate]methane (IRGANOX (registered trademark) 1010, manufactured by BASF SE), n-octadecyl-3-(4'-hydroxy-3,5'-di-t-butylphenyl)propionate (IRGANOX (registered trademark) 1076, manufactured by BASF SE), and the like; and phosphite type stabilizers typified by bis(2,4-di-t-butylphenyl)pentaerythritol diphosphite, tris(2,4-di-t-butylphenyl)phosphite, and the like.

Examples of the surfactant include anionic surfactants such as a carboxylate salt, fatty acid salt, cyclic fatty acid salt, special polycarboxylate salt type activator, sulfonate salt, alkyl or alkenyl sulfonate salt, alkyl allyl sulfonate salt, polycondensate of alkyl allyl sulfonate salt, sulfate salt, alkyl sulfate ester, polyoxyethylene-alkyl ether sulfate salt, polyoxyethylene-alkyl phenyl ether sulfate salt, phosphate ester, alkyl phosphate ester, polyoxyethylene-alkyl(phenyl)ether phosphate ester salt, and inorganic phosphate salt; nonionic surfactants such as a polyoxyethylene derivative, polyoxyethylene-alkyl ether, polyoxyethylene-alkylphenyl ether, polyoxyethylene-sorbitan fatty acid ester, polyoxyethylene fatty acid ester, polyoxyethylene-polyoxypropylene block polymer, polyoxyethylene alkylamine, polyoxyethylene alkyl amide, polyhydric alcohol derivative; cationic surfactants such as an alkylamine salt and quaternary ammonium salt; amphoteric surfactants such as an alkyl betaine; fluorine-containing surfactants; silicon-containing surfactants; and reactive surfactants, and one or two or more of these compounds can be used.

Further, the layer A, the layer B, and the layer C may contain a polyolefin-based resin such as a low-density elastomer used for improving impact strength as an additive.

[2] Barrier Layer and Adhesive Layer

The one or more layers selected from the group consisting of a barrier layer and an adhesive layer are layers located between the layer C and the layer D, and may be a single layer of either the barrier layer or the adhesive layer, or may be a multilayer including the barrier layer and the adhesive layer.

The barrier layer is a layer that prevents permeation of gases such as oxygen and water vapor. Examples of the barrier layer include a metal oxide layer formed by depositing an inorganic compound, and a layer formed from a composition containing an inorganic layered compound and a polyvinyl alcohol-based resin. Here, examples of the layer formed by depositing an inorganic compound include a layer formed from silicon oxide, alumina, and spinel. The barrier layer can be, for example, the layer formed from a composition containing an inorganic layered compound and a polyvinyl alcohol-based resin.

Here, examples of the inorganic layered compound include a kaolinite group, a smectite group, and a mica group. Among them, a smectite group such as layered silicate mineral, hectorite, and saponite is preferable and easily incorporates a resin between the layers of the inorganic layered compound to form a composite. Among the smectite group, a layered silicate mineral is preferable, which can impart a high oxygen gas barrier property.

The polyvinyl alcohol-based resin is a polymer having a structural unit derived from vinyl alcohol as a main component. Examples of such a "polyvinyl alcohol" include a polymer obtained by hydrolyzing an acetate moiety of a vinyl acetate polymer; polymers obtained by hydrolyzing a vinyl trifluoroacetate polymer, vinyl formate polymer, vinyl pivalate polymer, t-butyl vinyl ether polymer, trimethylsilyl vinyl ether polymer, and the like, respectively (for details of "polyvinyl alcohol", reference can be made to, for example, "PVA no Sekai (World of PVA)", edited by Poval-Kai (Poval Society), 1992, Kobunshi Kanko-Kai, Co., Ltd. (Polymer Publishing Society, Co., Ltd.); "Poval", Nagano et al., 1981, Kobunshi Kanko-Kai Co., Ltd.). The degree of "saponification" of the ester moiety of a polymer is preferably 70 mol% or more, more preferably 85 mol% or more, and still more preferably 98% mol or more. In addition, the polymerization degree of a polymer used is preferably 100 or more and 5000 or less, and more preferably 200 or more and 3000 or less.

In addition, the vinyl alcohol may be a so-called vinyl alcohol derivative having a functional group other than a hydroxyl group, and examples of the functional group other than a hydroxyl group include an amino group, thiol group, carboxyl group, sulfo group, phosphate group, carboxylate group, sulfonate ion group, phosphate ion group, ammonium group, phosphonium group, silyl group, siloxane group, alkyl group, allyl group, fluoroalkyl group, alkoxy group, carbonyl group, and a halogen group.

In addition, polyvinyl alcohol-based resin may be a copolymer containing a structural unit derived from vinyl alcohol and a structural unit derived from an $\alpha$-olefin such as ethylene or propylene. When the polyvinyl alcohol-based resin is a copolymer, the content of a structural unit derived from $\alpha$-olefin contained in the copolymer is preferably 40 mol% or less, and more preferably 15 mol% or less, from the viewpoint of solubility in an aqueous solvent.

The adhesive layer may be formed from an aqueous type adhesive or a solvent type adhesive for dry lamination, or may be formed from a solventless type adhesive for lamination. Examples of the adhesive for forming the adhesive layer include polyurethane-based adhesives such as a polyether polyurethane adhesive and polyester polyurethane adhesive, polyester-based adhesives, imine-based adhesives, and titanate-based adhesives. Examples of the polyurethane-based adhesive include TAKELAC (registered trademark) (manufactured by Mitsui Chemicals, Inc.) and TAKENATE (registered trademark) (manufactured by Mitsui Chemicals, Inc.).

Further, the adhesive layer may be a layer formed from high-density polyethylene, low-density polyethylene, ultra-low-density polyethylene, an ultra-low-density polyethylene ethylene-vinyl acetate copolymer, an ethylene-acrylic acid copolymer, an ethylene-acrylate ester copolymer, an ethylene-methacrylic acid copolymer, an ethylene-methacrylate ester copolymer, an ethylene-vinyl alcohol copolymer, an ethylene-vinyl acetate copolymer saponified product, an ethylene-styrene copolymer, an ethylene-vinyl cyclohexane copolymer, an ethylene-norbornene copolymer, a polyolefin rubber, a styrene-butadiene rubber, a styrene-butadiene-styrene block copolymer, an isoprene rubber, a styrene-isoprene rubber, an isobutylene rubber, or an acid-modified product, hydrogenated product, or the like of these resins.

[Sealant Film (Sealant Layer)]

The layer D containing the ethylene polymer (D) is a layer that functions as a sealant layer.

The ethylene polymer (D) that forms the layer D contains 70 mol% or more, and preferably 90 mol% or more of a structural unit derived from ethylene. The ethylene polymer (D) may be composed of 100 mol% of a structural unit derived from ethylene. The ethylene polymer (D) contains 70 mol% or more of a structural unit derived from ethylene and thereby can be uniformly compatible with the ethylene polymer (A), the ethylene polymer (B), and the ethylene polymer (C) contained in the base layer.

The density of the ethylene polymer (D) is preferably 880 $kg/m^3$ or more, more preferably 890 $kg/m^3$ or more, and still more preferably 895 $kg/m^3$ or more, and also preferably less than 930 $kg/m^3$, from the viewpoint of enhancing the handleability as a packaging film, transparency, rigidity, and impact strength of the film.

The MFR of the ethylene polymer (D) is preferably 0.01 g/10 min or more, more preferably 0.1 g/10 min or more, and still more preferably 0.5 g/10 min or more, and also, preferably less than 10 g/10 min, more preferably 7 g/10 min or less, and still more preferably 5 g/10 min or less, from the viewpoint of suitable adjustment of an extrusion load in film shaping and enhancement of film strength.

As the ethylene polymer (D), an ethylene polymer similar to the ethylene polymer (C) in the mole fraction of a structural unit derived from ethylene, density, and MFR can be used. That is, for the ethylene polymer (D), an ethylene polymer such as high-pressure low-density polyethylene, high-density polyethylene, an ethylene-$\alpha$-olefin copolymer, an ethylene-vinyl ester copolymer, or an ethylene-unsaturated carboxylic ester copolymer can be used, and high-pressure low-density polyethylene, high-density polyethylene, or an ethylene-$\alpha$-olefin copolymer is suitably used, and high-density polyethylene or an ethylene-$\alpha$-olefin copolymer is more suitably used.

Additionally, as in the case of the ethylene polymer (C), the ethylene polymer (D) and an ethylene polymer other than the ethylene polymer (D) may be used in combination. In this case, the content of the ethylene polymer (D) is preferably 60 wt% or more, and more preferably 80 wt% or more, based on 100 wt% of the total of two or more of ethylene polymers contained in the layer D. When the content of the ethylene polymer (D) is 90 wt% or more, the layer D can be suitably formed.

When the layer D contains the inorganic filler, the content of the inorganic filler is preferably less than 20 wt% when the total content of the ethylene polymer (D) and the inorganic filler is 100 wt%, and although not limited, it is more preferable that the layer D does not contain the inorganic filler.

[Other Layers]

Other layers may be included between the layer A and the layer B, between the layer B and the layer C, between the layer C and one or more layers selected from the group consisting of the barrier layer and the adhesive layer, and between the layer D and one or more layers selected from the group consisting of the barrier layer and the adhesive layer.

Examples of such other layers include a light shielding layer, an oxygen absorbing layer, a colored layer, and a conductive layer.

<Method for Producing Laminated Film>

The laminated film according to the present embodiment can be produced by a production method including the steps of: for the base film formed by sequentially laminating the layer A, the layer B, and the layer C, subjecting the surface on the layer C side of the base film (layer A/layer B/layer C) to a corona treatment; and laminating the layer D onto the corona-treated surface on the layer C side of the base film with one or more layers selected from the group consisting of the barrier layer and the adhesive layer interposed between the layer D and the corona-treated surface.

The method for producing film shaping resin compositions each containing an ethylene polymer for shaping the layer A, the layer B, or the layer C is not particularly limited, and the resin compositions may be prepared by separately melt-blending (melt-kneading) in advance, individually dry-blending, or dry-blending as one or more master batches. For the dry blending, any of various blenders such as a Henschel mixer and a tumbler mixer is used, and for the melt blending, any of various mixers such as a single screw extruder, a twin screw extruder, a Banbury mixer, and a heat roll is used.

The thickness of the layer A is preferably 5 $\mu$m or more, and more preferably 7 $\mu$m or more from the viewpoint of enhancing the processing stability of the film. The thickness of the layer A is also preferably 30 $\mu$m or less, and more preferably 20 $\mu$m or less from the viewpoint of enhancing the rigidity of the film.

The thickness of the layer B is preferably 10 $\mu$m or more, and more preferably 20 $\mu$m or more from the viewpoint of enhancing the rigidity of the film. The thickness of the layer B is also preferably 60 $\mu$m or less, and more preferably 40 $\mu$m or less from the viewpoint of enhancing the processing stability of the film.

The thickness of the layer C is preferably 5 $\mu$m or more, and more preferably 7 $\mu$m or more from the viewpoint of enhancing the processing stability of the film. The thickness of the layer C is also preferably 30 $\mu$m or less, and more preferably 20 $\mu$m or less from the viewpoint of enhancing the rigidity of the film.

In the base film, the thickness ratio among layers of layer A/layer B/layer C is preferably 1/1/1 to 1/15/1, more preferably 1/2/1 to 1/10/1, and still more preferably 1/2/1 to 1/6/1.

A method for producing the base film is not particularly limited, and examples thereof include known film production methods and include extrusion methods such as an inflation method using an inflation film production apparatus and a T-die method using a T-die cast film production apparatus.

When the T-die method is used, the resin processing temperature is 230°C to 300°C, and the chilled roll temperature is 20°C to 50°C.

When the inflation method is used, a tackiness agent such as polybutene may be added to the resin compositions for forming the layer A, the layer B, and the layer C. Examples of a method for adding polybutene include a method of using a raw material obtained by compounding polybutene in advance with a Banbury kneader or the like, and a method of injecting polybutene into an extruder. The concentration of polybutene is 0.5 to 20 wt%, and polybutene may be added to all three layers, only both outer layers (the layer A and layer C), or only the intermediate layer (the layer B). As the polybutene, commercially available products may be used, such as HV35 manufactured by Nippon Petrochemical Co., Ltd., and polybutene 100H manufactured by Idemitsu Petrochemical Co., Ltd.

Before the base film and the layer D are laminated with one or more layers selected from the group consisting of the barrier layer and the adhesive layer interposed between the base film and the layer D, the surface of the base film on the layer C side may be subjected to a corona treatment. Thereby, the adhesive strength between the layer C and the barrier layer or the adhesive layer can be enhanced.

As for a method for forming the barrier layer, for example, the layer of silicon oxide, alumina, spinel, or the like may be formed by vapor deposition. The barrier layer formed from a composition containing the inorganic layered compound and the polyvinyl alcohol-based resin may be formed by applying and drying the composition.

A method for laminating the base film (layer A/layer B/layer C) and the layer D may be appropriately selected depending on whether or not the adhesive layer is formed. When the adhesive layer is formed, examples of the method include laminating the sealant film (layer D) shaped in advance by a dry lamination method or an extrusion lamination method. Additionally, the thickness of the layer D and the sealant film for forming the layer D is preferably 20 $\mu$m or more, and more preferably 30 $\mu$m or more from the viewpoint of enhancing the seal strength. The thickness is also preferably 100 $\mu$m or less, and more preferably 80 $\mu$m or less from the viewpoint that the amount of the ethylene polymer (D) used can be reduced.

In the dry lamination method, for example, an aqueous or solvent type adhesive for dry lamination is applied to the corona-treated surface or the surface on the barrier layer side of the layer C of the base film, and dried to form an adhesive layer, and thereby the base film (layer A/layer B/layer C) and the sealant film (layer D) can be bonded to each other by the dry lamination method.

In the extrusion lamination method (sandwich lamination method), a solventless type adhesive for lamination is melt-extruded between the layer C in the base film or the barrier layer and the sealant film (layer D) to form an adhesive layer. Thereby, the base film (layer A/layer B/layer C) and the sealant film (layer D) can be bonded to each other with the adhesive layer interposed therebetween.

Further, when the adhesive layer is not formed, the layer D may be shaped by a solventless lamination method, in which a resin composition for shaping the layer D containing the ethylene polymer (D) is melt-extruded on the layer C in the base film or the barrier layer, and thus the layer D can be shaped.

<Modification 1>

The present invention is not limited to the above-described aspect. For example, a laminated film according to a modification (Modification 1) is a laminated film formed by sequentially laminating the layer A containing the ethylene polymer (A), the layer B containing the ethylene polymer (B) and the inorganic filler, and the layer C containing the ethylene polymer (C), and is an aspect in which the layer D is not laminated.

The layer A containing the ethylene polymer (A) and the layer B containing the ethylene polymer (B) and the inorganic filler are the same as those in the above-described aspect, and therefore the description thereof will be omitted.

The layer C containing the ethylene polymer (C) is, for example when the laminated film is applied to a packaging container or a packaging bag as a packaging material, a layer constituting an innermost layer, that is, a surface in contact with contents such as food, and can function as a sealant layer.

In this modification, the thickness of the layer C is preferably 20 $\mu$m or more, and more preferably 30 $\mu$m or more, and is also preferably 100 $\mu$m or less, and more preferably 80 $\mu$m or less, from the viewpoint of imparting a function as a sealant layer.

In addition, in this modification, when the layer C contains the inorganic filler, the content of the inorganic filler is preferably less than 20 wt% when the total content of the ethylene polymer (C) and the inorganic filler is 100 wt%, and although not limited, the layer C preferably contains no inorganic filler.

Additionally, in the laminated film according to the present aspect, the layer A containing the ethylene polymer (A), and the ethylene polymer (B) may be shaped as a base film, and one layer selected from the group consisting of the barrier layer and the adhesive layer may be formed between the layer B and the layer C. In addition, another layer such as a light shielding layer, light shielding layer, oxygen absorbing layer, colored layer, and conductive layer may be formed between the layer A and layer B.

In the laminated film according to the present modification, the layer A, the layer B, and the layer C may be integrally shaped by the inflation method or the T-die method. Alternatively, the layer A and the layer B may be shaped as a base film, on which the layer C may be laminated with the barrier layer and/or the adhesive layer interposed between the base film and the layer C by the dry lamination method, extrusion lamination method, solventless lamination method, or the like.

<Modification 2>

The present invention is not limited to the above-described aspect and the modification. For example, a laminated film according to another modification (Modification 2) is formed by laminating a layer A' containing an ethylene-$\alpha$-olefin copolymer (A') and a layer B' containing an ethylene-$\alpha$-olefin copolymer (B') and an inorganic filler.

The ethylene-$\alpha$-olefin copolymer (A') contains 80 mol% or more of a structural unit derived from ethylene, and has a density of 930 kg/m$^3$ to 970 kg/m$^3$ and an MFR of 0.01 g/10 min or more and less than 3 g/10 min.

The ethylene-$\alpha$-olefin copolymer (B') contains 70 mol% or more of a structural unit derived from ethylene, and has a density of 930 kg/m$^3$ to 970 kg/m$^3$ and an MFR of 3 g/10 min to 25 g/10 min.

Examples of the inorganic filler include the same inorganic fillers as in the above-described aspect.

In the layer B', the content of the ethylene-$\alpha$-olefin copolymer (B') is 20 wt% to 60 wt% and the content of the inorganic filler is 40 wt% to 80 wt% with respect to the total content of the ethylene-$\alpha$-olefin copolymer (B') and the inorganic filler of 100 wt%.

<Application of Laminated Film>

The laminated film according to one aspect of the present invention has high rigidity and thermal shrinkage resistance without, for example, a polyethylene terephthalate (PET) film or a polyamide film laminated thereto. Therefore, the laminated film according to one aspect can be suitably used as, for example, a packaging bag and a packaging container for storing food, detergent, cosmetics, or the like. In addition, since the base layer and the sealant layer can be shaped from an ethylene polymer, the laminated film can be suitably used as a mono-material package that can be reused without separating the base layer and the sealant layer.

<Recycling Method>

The laminated film according to one aspect of the present invention may be used as, for example, a container for food, detergent, cosmetics, or the like, and then recovered and recycled. The laminated film may be recycled by, for example, washing the recovered container with a solvent such as alcohol, drying and then melting the container, and pelletizing the melt. The melting of the container and pelletizing can be performed without separating all the layers of the laminated film. The pellets obtained and an ethylene polymer master batch having an inorganic filler content different from that of the pellets may be mixed and melted to adjust the concentration of the inorganic filler. As an ethylene polymer used in the master batch, any one of the ethylene polymer (A), the ethylene polymer (B), and the ethylene polymer (C) may be selected.

The recycled resin material containing the ethylene polymer can be suitably used, for example, as a shaping material for food, detergent, and cosmetics applications.

The present invention is not limited to the above-described embodiments, and various modifications can be made within the scope shown in the claims, and embodiments obtained by appropriately combining technical means disclosed in different embodiments respectively are also included in the technical scope of the present invention.

EXAMPLES

Hereinafter, the present invention will be described more specifically with Examples. However, the present invention is not limited to these Examples.

(1) Methods for measuring various physical properties of an ethylene polymer are as follows.

(1-1) Content (unit: mol%) of structural unit derived from ethylene in ethylene polymer

An IR spectrum was measured using an IR measuring apparatus (trade name "FT-IR480" manufactured by JASCO Corporation), and the content (unit: mol%) of a structural unit derived from ethylene was measured.

(1-2) Density (unit: $kg/m^3$) of ethylene polymer

An annealing treatment described in JIS K6760-1995 was performed, and then the density (unit: $kg/m^3$) of an ethylene polymer was measured according to Method A described in JIS K7112-1980.

(1-3) Melt flow rate (MFR, unit: g/10 min) of ethylene polymer

The MFR (unit: g/10 min) of an ethylene polymer was measured according to JIS K7210-1-2014 under conditions of a temperature of 190°C and a load of 21.18 N.

(2) Materials used in Examples and Comparative Examples are as follows.

(2-1) Ethylene polymer

•Ethylene polymer 1

Ethylene-hexene copolymer, manufactured by Sumitomo Chemical Co., Ltd., trade name: "SUMIKATHENE E (registered trademark) FV407", production method: gas phase polymerization using a metallocene catalyst, structural unit derived from ethylene: 98.7 mol%, density: 930 $kg/m^3$, MFR: 3.0 g/10 min.

•Ethylene polymer 2

Ethylene-$\alpha$-olefin copolymer, manufactured by Keiyo Polyethylene Co., Ltd., trade name: "E 8080", structural unit derived from ethylene: 99.1 mol%, density: 958 $kg/m^3$, MFR: 1.0 g/10 min.

•Ethylene polymer 3

Ethylene homopolymer, manufactured by Sumitomo Chemical Co., Ltd., trade name: "SUMIKATHENE (registered trademark) F208-3", production method: high-pressure radical polymerization, structural unit derived from ethylene: 100 mol%, density: 923 $kg/m^3$, MFR: 1.0 g/10 min.

•Ethylene polymer 4

Ethylene-hexene copolymer, manufactured by Sumitomo Chemical Co., Ltd., trade name: "SUMIKATHENE (registered trademark) GA401", production method: high-pressure ionic polymerization using a Ziegler-Natta catalyst, structural unit derived from ethylene: 99.0 mol%, density: 935 $kg/m^3$, MFR: 3.0 g/10 min.

•Ethylene polymer 5

Ethylene homopolymer, manufactured by Sumitomo Chemical Co., Ltd., trade name: "SUMIKATHENE (registered trademark) F200", production method: high-pressure radical polymerization, structural unit derived from ethylene: 100%, density: 922 kg/m$^3$, MFR: 2.0 g/10 min.

•Ethylene polymer 6

Manufactured by Dow Chemical Company, trade name: "Engage (registered trademark) 8402", production method: solution polymerization using a metallocene catalyst, structural unit derived from ethylene: 97.6 mol%, density: 902 kg/m$^3$, MFR: 30 g/10 min.

•Ethylene polymer 7

Ethylene-α-olefin copolymer, manufactured by Keiyo Polyethylene Co., Ltd., trade name: "G2500", structural unit derived from ethylene: 99.2 mol%, density: 960 kg/m$^3$, MFR: 5 g/10 min.

•Ethylene polymer 8

Ethylene-hexene copolymer, manufactured by Sumitomo Chemical Co., Ltd., trade name: "SUMIKATHENE E (registered trademark) FV102", production method: gas phase polymerization using a metallocene catalyst, structural unit derived from ethylene: 98.6 mol%, density: 926 kg/m$^3$, MFR: 0.8 g/10 min.

(2-2) Inorganic filler

•Inorganic filler 1

Talc, manufactured by Asada Milling Co., Ltd., trade name: "JM620P", median diameter (d50): 5 μm.

•Inorganic filler 2

Hydrotalcite, manufactured by Kyowa Chemical Industry Co., Ltd., trade name: "DHT-4A", median diameter (d50): 0.5 μm.

•Inorganic filler 3

Fibrous basic magnesium sulfate particles, manufactured by Ube Material Industries, Ltd., trade name: "A-1", fiber length: 8 to 30 μm, fiber diameter: 0.5 to 1.0 μm.

(2-3) Other components

• Lubricant 1: zinc stearate, manufactured by ADEKA Corporation, trade name: "ZNS-F".

(3) Methods for evaluating various physical properties of a film are as follows.

(3-1) Rigidity (Young's modulus, unit: MPa)

A film was cut into a size of 120 mm × 30 mm to prepare a test piece for rigidity evaluation. Using an Auto Strain manufactured by Yasuda Seiki Seisakusho, Ltd., the test piece was subjected to a tensile test under conditions of a grip interval of 60 mm and a tensile speed of 5 mm/min under an atmosphere of 23°C and a humidity of 50%. The initial elastic modulus (Young's modulus) was determined from the slope of the tangent at the zero point of the tension-stress curve obtained by the tensile test. Incidentally, a test piece cut out so that the feeding direction during film production corresponds to the long axis of the test piece was used as a test piece in the machine direction (MD). Furthermore, a test piece cut out so that the feeding direction during film production corresponds to the short axis of the test piece was used as a test piece in the transverse direction (TD). The rigidity is better as a value of the initial elastic modulus is higher.

(3-2) Thermal shrinkage rate (unit:%)

A film was cut into a size of 20 cm × 4 cm to prepare a test piece for evaluation of thermal shrinkage rate. On the test piece, a measurement line of about 16 cm passing through the center point of the test piece and parallel to the long axis of the test piece was drawn. Using a caliper, the length ($L_0$) of the measurement line was gauged to two decimal places in mm unit. Then, the test piece was hung with a clip so as to be hung down along the long axis in a hot air circulating oven at 100°C, and heat-treated for 30 minutes. Thereafter, the test piece was taken out from the oven and air-cooled for 1 hour, then the length ($L_1$) of the measurement line was gauged with a caliper to two decimal places in mm unit, and the thermal shrinkage rate was calculated using the following formula.

$$\text{Thermal shrinkage rate} = (L_0-L_1)/L_0 \times 100$$

(3-3) Transparency (Total light transmittance, unit: %)

Measurement was performed in accordance with JIS K7136-2000.

[Example 1]

Using a Henschel mixer, 40 parts by mass of the ethylene polymer 4, 60 parts by mass of the inorganic filler 1, and 1.2 parts by mass of the lubricant 1 were dry-blended under a nitrogen gas atmosphere to obtain a mixture. The mixture obtained was melt-kneaded at a temperature of 220 to 230°C and a screw rotation speed of 200 rpm under a nitrogen gas atmosphere using a co-directional twin screw extruder (screw diameter: 37 mm$\varphi$, TEM35B type) to obtain a master batch pellet 1.

A three-layer coextrusion inflation film-shaping machine (manufactured by Placo Co., Ltd.) is used to shape a three-layer inflation film having a layer configuration of a layer A (ethylene polymer 1: 100 parts by mass, thickness: 10 $\mu$m)/a layer B (master batch pellet 1: 100 parts by mass, thickness: 20 $\mu$m)/a layer C (ethylene polymer 8: 100 parts by mass, thickness: 10 $\mu$m). Then, the surface of the obtained film on the layer C side was subjected to a corona treatment to obtain an inflation film 1. The shaping conditions and corona treatment conditions were as follows.

<Shaping Conditions>

- Extruder: $\varphi$ 50 mm $\times$ 3 extruders
- Die: $\varphi$ 150 mm, lip: 2.0 mmt
- Set temperature of die: 185°C
- Processing temperature for layer A: 185°C
- Extrusion condition for layer A: 4 to 6 kg/h
- Processing temperature for layer B: 185°C
- Extrusion condition for layer B: 10 to 13 kg/h
- Processing temperature for layer C: 185°C
- Extrusion condition for layer C: 4 to 6 kg/h
- Diameter in folded state: 470 mm

<Corona Treatment Conditions>

- Corona treatment apparatus: AGF-B 10 type manufactured by Wedge Co., Ltd.
- Corona output: 0.2 kW

The components and the evaluation results of physical properties of the inflation film 1 are shown in Table 1.

[Example 2]

An inflation film 2 was obtained under the same conditions as in Example 1 except that the layer B was formed using a mixture obtained by dry-blending 50 parts by mass of the master batch pellet 1 and 50 parts by mass of the ethylene polymer 4 instead of 100 parts by mass of the master batch pellet 1.

The components and the evaluation results of physical properties of the inflation film 2 are shown in Table 1.

[Example 3]

An inflation film 3 was obtained in a similar manner to Example 1 except for using 100 parts by mass of the ethylene polymer 2 instead of 100 parts by mass of the ethylene polymer 1 as the layer A.

The components and the evaluation results of physical properties of the inflation film 3 are shown in Table 1.

[Example 4]

Using a Henschel mixer, 40 parts by mass of the ethylene polymer 4, 60 parts by mass of the inorganic filler 2, and 1.2 parts by mass of the lubricant 1 were dry-blended under a nitrogen gas atmosphere to obtain a mixture. The mixture obtained was melt-kneaded at a temperature of 220 to 230°C and a screw rotation speed of 200 rpm under a nitrogen gas atmosphere using a co-directional twin screw extruder (screw diameter: 37 mmφ, TEM35B type) to obtain a master batch pellet 2.

An inflation film 4 was obtained in a similar manner to Example 1 except for changing the following points:

- For the layer A, a mixture obtained by dry-blending 90 parts by mass of the ethylene polymer 1 and 10 parts by mass of the ethylene polymer 3 was used instead of 100 parts by mass of the ethylene polymer 1.
- For the layer B, a mixture obtained by dry-blending 50 wt% of the master batch pellet 2 and 50 parts by mass of the ethylene polymer 4 was used instead of 100 parts by mass of the master batch pellet 1.
- For the layer C, a mixture obtained by dry-blending 90 parts by mass of the ethylene polymer 1 and 10 parts by mass of the ethylene polymer 3 was used instead of 100 parts by mass of the ethylene polymer 8.

The components and the evaluation results of physical properties of the inflation film 4 are shown in Table 1.

[Example 5]

Using a Henschel mixer, 40 parts by mass of the ethylene polymer 4, 60 parts by mass of the inorganic filler 3, and 1.2 parts by mass of the lubricant 1 were dry-blended under a nitrogen gas atmosphere to obtain a mixture. The mixture obtained was melt-kneaded at a temperature of 220 to 230°C and a screw rotation speed of 200 rpm under a nitrogen gas atmosphere using a co-directional twin screw extruder (screw diameter: 37 mmφ, TEM35B type) to obtain a master batch pellet 3.

For the layer B, an inflation film 5 was obtained in a similar manner to Example 4 except for using a mixture obtained by dry-blending 50 parts by mass of the master batch pellet 3 and 50 parts by mass of the ethylene polymer 4 instead of the mixture obtained by dry-blending 50 parts by mass of the master batch pellet 2 and 50 parts by mass of the ethylene polymer 4.

The components and the evaluation results of physical properties of the inflation film 5 are shown in Table 1.

[Example 6]

Using a Henschel mixer, 40 parts by mass of the ethylene polymer 7, 60 parts by mass of the inorganic filler 1, and 1.2 parts by mass of the lubricant 1 were dry-blended under a nitrogen gas atmosphere. The mixture obtained was melt-kneaded at a temperature of 220 to 230°C and a screw rotation speed of 200 rpm under a nitrogen gas atmosphere using a co-directional twin screw extruder (screw diameter: 37 mmφ, TEM35B type) to obtain a master batch pellet 4.

For the layer B, an inflation film 6 was obtained in a similar manner to Example 4 except for using a mixture obtained by dry-blending 50 parts by mass of the master batch pellet 4 and 50 parts by mass of the ethylene polymer 7 instead of the mixture obtained by dry-blending 50 parts by mass of the master batch pellet 2 and 50 parts by mass of the ethylene polymer 4.

The components and the evaluation results of physical properties of the inflation film 6 are shown in Table 1.

[Table 1]

| | | Component | Polymer Density | Example 1 [1]IF1 | Example 2 IF2 | Example 3 IF3 | Example 4 IF4 | Example 5 IF5 | Example 6 IF6 |
|---|---|---|---|---|---|---|---|---|---|
| Base film | Layer A | Ethylene polymer 1 | 930 kg/m$^3$ | 100 | 100 | - | 90 | 90 | 90 |
| | | Ethylene polymer 2 | 958 kg/m$^3$ | - | - | 100 | - | - | - |
| | | Ethylene polymer 3 | 923 kg/m$^3$ | - | - | - | 10 | 10 | 10 |
| | Layer B | Ethylene polymer 4 | 935 kg/m$^3$ | 40 | 70 | 40 | 70 | 70 | |
| | | Ethylene polymer 7 | 935 kg/m$^3$ | - | - | - | - | - | 70 |
| | | Inorganic filler 1 | - | 60 | 30 | 60 | - | - | 30 |
| | | Inorganic filler 2 | - | - | - | - | 30 | - | - |
| | | Inorganic filler 3 | - | - | - | - | - | 30 | - |
| | | Lubricant 1 | - | 1.2 | 0.6 | 1.2 | 0.6 | 0.6 | 0.6 |
| | Layer C | Ethylene polymer 1 | 930 kg/m$^3$ | - | - | - | 90 | 90 | 90 |
| | | Ethylene polymer 3 | 923 kg/m$^3$ | - | - | - | 10 | 10 | 10 |
| | | Ethylene polymer 8 | 926 kg/m$^3$ | 100 | 100 | 100 | - | - | - |
| Young's modulus (MPa) | | | MD | 1277 | 765 | 1777 | 680 | 1233 | 2027 |
| | | | TD | 1151 | 742 | 1731 | 707 | 676 | 1992 |
| Thermal shrinkage rate (%) | | | MD | 0.5 | 0. 0 | 0. 0 | 0. 3 | 0. 4 | 0.1 |
| | | | TD | 0. 3 | 0.2 | 0.1 | 0.2 | 0.2 | 0. 0 |
| Total light transmittance (%) | | | | 91 | 89 | 90 | 89 | 91 | 89 |
| [1] The inflation film was abbreviated as IF. | | | | | | | | | |

[Comparative Example 1]

Using a LABO PLASTMILL, 31.5 parts by mass of the ethylene polymer 4, 10 parts by mass of the ethylene polymer 5, and 58.5 parts by mass of the ethylene polymer 6 were kneaded at 190°C and a rotation speed of 25 rpm for 5 minutes. The kneaded product obtained was pressed at a temperature of 150°C and a pressure of 10 MPa for 5 minutes using a hot press machine, and then cooled at a temperature of 30°C for 5 minutes using a cooling press machine to shape a press sheet having a size of 110 mm × 110 mm and a thickness of about 1 mm.

The press sheet obtained was cut into a size of 92 mm × 92 mm. Using a tabletop orienting machine manufactured by Toyo Seiki Seisaku-sho, Ltd., MD orienting was performed by 1 × 3 times at an orienting temperature of 115°C, for 3 minutes after heat, and at a speed of 0.50 m/min. After 5 seconds, the cut sheet was oriented by 3 times in the TD at a speed of 0.50 m/min. The oriented state was held for 1 minute and then taken out to obtain a biaxially oriented film oriented by 3 × 3 times.

The evaluation results of the physical properties of the biaxially oriented film are shown in Table 2.

[Table 2]

| | Component | Polymer Density | Comparative Example 1 |
|---|---|---|---|
| | | | [1]BDF |
| Base film | Ethylene polymer 4 | 935 kg/m$^3$ | 31.5 |
| | Ethylene polymer 5 | 922 kg/m$^3$ | 10 |
| | Ethylene polymer 6 | 902 kg/m$^3$ | 58.5 |
| Young's modulus (MPa) | | MD | 167 |
| | | TD | 167 |
| Thermal shrinkage rate (%) | | MD | 1.5 |
| | | TD | 3.1 |
| Total light transmittance (%) | | | 90 |

[1] The biaxially oriented film was abbreviated as BDF (registered trademark).

[Example 7]

A dry-lamination adhesive 1 was prepared by mixing 10 parts by mass of TAKELAC (registered trademark) A525 (manufactured by Mitsui Chemicals, Inc.), 1 part by mass of TAKENATE (registered trademark) A52 (manufactured by Mitsui Chemicals, Inc.), and 15 parts by mass of ethyl acetate, and used as an adhesive for forming an adhesive layer.

As a base film, the inflation film 1 obtained in Example 1 was prepared.

In addition, as a sealant film for forming the layer D, an ethylene-$\alpha$-olefin copolymer film (manufactured by Mitsui Chemicals Tohcello, Inc., trade name: "L-LDPE film FCD # 40", thickness: 40 $\mu$m, density of an ethylene-$\alpha$-olefin copolymer: 916.6 kg/m$^3$, structural unit derived from ethylene: 98.4 mol%, MFR: 3.3 g/10 min) was prepared.

The ethylene-$\alpha$-olefin copolymer film was bonded to the corona-treated surface of the layer C of the inflation film 1 with the dry-lamination adhesive 1 therebetween by a dry lamination method to obtain a laminated film having a five-layer structure of a layer A/layer B/layer C/adhesive layer/layer D. The evaluation results of the physical properties of the laminated film obtained are shown in Table 3.

[Comparative Example 2]

A laminated film was obtained in a similar manner to Example 7 except for using the biaxially oriented film obtained in Comparative Example 1 as a base film instead of the inflation film 1 obtained in Example 1. The laminated film obtained has a three-layer structure of a biaxially oriented film/adhesive layer/layer D. The evaluation results of the physical properties of the laminated film obtained are shown in Table 3.

[Synthesis Example 1: Synthesis of Barrier Layer Dispersion]

To a reaction vessel, 320.0 g of ion-exchanged water and 13.4 g of polyvinyl alcohol (manufactured by Kuraray Co., Ltd., trade name: "PVA-105", average degree of polymerization: 500, saponification degree: 98 to 99 mol%) were added. While stirring the mixture in the reaction vessel, the temperature was raised to 90°C, and continuously, the mixture was stirred at 90°C for 60 minutes to dissolve polyvinyl alcohol in the water. The aqueous solution of polyvinyl alcohol obtained was cooled to 23°C, and while stirring the solution at 23°C continuously, 6.7g of layered silicate mineral (manufactured by Kunimine Industrial Co., Ltd., trade name: "KUNIPIA G") was added thereto, which was then stirred at 23°C for 30 minutes. The mixture obtained was subjected to a high-pressure dispersion treatment using a high-pressure dispersing apparatus (manufactured by Microfluidics Corporation, trade name: "ultra-high-pressure homogenizer M110-E/H", capillary diameter: 100 $\mu$m) under conditions of a temperature of 23°C and a pressure of 1250 kgf/cm$^2$ to obtain a barrier layer dispersion 1.

[Example 8]

The barrier layer dispersion 1 obtained in Synthesis Example 1 was applied to the corona-treated surface of the layer C of the inflation film 1 obtained in Example 1. Thereafter, the film was dried at 60°C for 20 minutes using an oven to form a barrier layer composed of a 0.4 $\mu$m barrier coating film, thus obtaining a barrier film.

A laminated film was obtained in a similar manner to Example 7 except that, using the barrier film obtained above as a base film instead of the inflation film 1, the surface on the barrier layer side and the ethylene-$\alpha$-olefin copolymer film were bonded to each other. The laminated film obtained has a six-layer structure of a layer A/layer B/layer C/barrier layer/adhesive layer/layer D. The evaluation results of the physical properties of the laminated film obtained are shown in Table 3.

[Example 9]

A laminated film was obtained in a similar manner to Example 8 except for using the inflation film 2 obtained in Example 2 instead of the inflation film 1 obtained in Example 1. The laminated film obtained has a six-layer structure of a layer A/layer B/layer C/barrier layer/adhesive layer/layer D. The evaluation results of the physical properties of the laminated film obtained are shown in Table 3.

[Example 10]

A laminated film was obtained in a similar manner to Example 8 except for using the inflation film 3 obtained in Example 3 instead of the inflation film 1 obtained in Example 1. The laminated film obtained has a six-layer structure of a layer A/layer B/layer C/barrier layer/adhesive layer/layer D. The evaluation results of the physical properties of the laminated film obtained are shown in Table 3.

[Example 11]

A laminated film was obtained in a similar manner to Example 8 except for using the inflation film 4 obtained in Example 4 instead of the inflation film 1 obtained in Example 1. The laminated film obtained has a six-layer structure of a layer A/layer B/layer C/barrier layer/adhesive layer/layer D. The evaluation results of the physical properties of the laminated film obtained are shown in Table 3.

[Example 12]

A laminated film was obtained in a similar manner to Example 8 except for using the inflation film 5 obtained in Example 5 instead of the inflation film 1 obtained in Example 1. The laminated film obtained has a six-layer structure of a layer A/layer B/layer C/barrier layer/adhesive layer/layer D. The evaluation results of the physical properties of the laminated film obtained are shown in Table 3.

[Example 13]

A laminated film was obtained in a similar manner to Example 8 except for using the inflation film 6 obtained in Example 6 instead of the inflation film 1 obtained in Example 1. The laminated film obtained has a six-layer structure of a layer A/layer B/layer C/barrier layer/adhesive layer/layer D. The evaluation results of the physical properties of the laminated film obtained are shown in Table 3.

[Table 3]

| | | Example 7 | Example 8 | Example 9 | Example 10 | Example 11 | Example 12 | Example 13 | Comparative Example 2 |
|---|---|---|---|---|---|---|---|---|---|
| Lamination film | Base film [1] | IF1 | IF1 | IF2 | IF3 | IF4 | IF5 | IF6 | [1]BDF |
| | Barrier layer | - | Barrier layer dispersion 1 | | | | | | - |
| | Adhesive layer | Dry-lamination adhesive 1 | | | | | | | |
| | Layer D | Ethylene-$\alpha$-olefin copolymer (density: 916.6 kg/m$^3$) | | | | | | | |
| Young's modulus (MPa) | MD | 576 | 651 | 435 | 836 | 362 | 645 | 991 | 154 |
| | TD | 582 | 644 | 471 | 921 | 374 | 666 | 983 | 149 |
| Heat shrinkage (%) | MD | 0. 4 | 0. 3 | 0.2 | 0.2 | 0.4 | 0. 4 | 0.2 | 1.3 |
| | TD | 0. 4 | 0.2 | 0.2 | 0.2 | 0.3 | 0. 7 | 0.3 | 1.8 |
| Total light transmittance (%) | | 89 | 87 | 87 | 89 | 91 | 90 | 89 | 90 |

EP 4 029 695 A1

[1] The inflation film was abbreviated as IF, and the biaxially oriented film was abbreviated as BDF (registered trademark).

The films of Examples 1 to 13, which exhibited high rigidity and excellent thermal shrinkage resistance as compared with the films of Comparative Examples 1 and 2, can be suitably used as a packaging material.

INDUSTRIAL APPLICABILITY

The laminated film according to one aspect of the present invention exhibits favorable rigidity and thermal shrinkage resistance, and is suitably used for various packaging materials suitable for material recycling, for example, food packaging materials.

**Claims**

1. A laminated film comprising, in sequence:

   a layer A containing an ethylene polymer (A) containing 80 mol% or more of a structural unit derived from ethylene;
   a layer B containing an ethylene polymer (B) containing 70 mol% or more of a structural unit derived from ethylene and an inorganic filler;
   a layer C containing an ethylene polymer (C) containing 70 mol% or more of a structural unit derived from ethylene;
   at least one layer selected from the group consisting of a barrier layer and an adhesive layer; and
   a layer D containing an ethylene polymer (D) containing 70 mol% or more of a structural unit derived from ethylene.

2. The laminated film according to claim 1, wherein the layer B has a content of the ethylene polymer (B) of 20 wt% to 80 wt% and a content of the inorganic filler of 20 wt% to 80 wt% with respect to a total content of the ethylene polymer (B) and the inorganic filler of 100 wt%.

3. The laminated film according to claim 1 or 2, wherein the inorganic filler is one or more compounds selected from the group consisting of calcium carbonate, kaolin, metakaolin, hydrotalcite, mica, talc, and fibrous basic magnesium sulfate particles.

4. The laminated film according to any one of claims 1 to 3, wherein

   the ethylene polymer (A) has a density of 930 kg/m$^3$ to 970 kg/m$^3$, and a melt flow rate of 0.01 g/10 min or more and less than 3 g/10 min as measured at a temperature of 190°C and a load of 21.18 N,
   the ethylene polymer (B) has a density of 930 kg/m$^3$ to 970 kg/m$^3$, and a melt flow rate of 3 g/10 min to 25 g/10 min as measured at a temperature of 190°C and a load of 21.18 N, and
   the ethylene polymer (C) has a density of 880 kg/m$^3$ or more and less than 930 kg/m$^3$, and a melt flow rate of 0.01 g/10 min or more and less than 3 g/10 min as measured at a temperature of 190°C and a load of 21.18 N.

5. The laminated film according to any one of claims 1 to 4, wherein the ethylene polymer (D) has a density of 880 kg/m$^3$ or more and less than 930 kg/m$^3$, and a melt flow rate of 0.01 g/10 min to 3 g/10 min as measured at a temperature of 190°C and a load of 21.18 N.

6. The laminated film according to any one of claims 1 to 5, wherein

   the layer A has a thickness of 5 $\mu$m to 30 $\mu$m,
   the layer B has a thickness of 20 $\mu$m to 60 $\mu$m, and
   the layer C has a thickness of 5 $\mu$m to 30 $\mu$m.

7. The laminated film according to any one of claims 1 to 6, wherein the layer D has a thickness of 20 $\mu$m to 100 $\mu$m.

8. The laminated film according to any one of claims 1 to 7, wherein

   the barrier layer is a layer including at least one selected from among silicon oxide, alumina and spinel, and a composition containing an inorganic layered compound and a polyvinyl alcohol-based resin, and

the adhesive layer is a layer including at least one adhesive selected from the group consisting of a polyurethane-based adhesive, a polyester-based adhesive, an imine-based adhesive, and a titanate-based adhesive.

9.  A method for producing the laminated film according to any one of claims 1 to 8, the method comprising steps of:

    for a base film comprising, in sequence, the layer A, the layer B, and the layer C, subjecting a surface on the layer C side to a corona treatment;
    laminating the layer D on the surface subjected to the corona treatment of the base film on the layer C side with the at least one layer selected from the group consisting of the barrier layer and the adhesive layer interposed between the layer C and the surface subjected the corona treatment.

10. A laminated film comprising, in sequence:

    a layer A containing an ethylene polymer (A) containing 80 mol% or more of a structural unit derived from ethylene;
    a layer B containing an ethylene polymer (B) containing 70 mol% or more of a structural unit derived from ethylene and an inorganic filler; and
    a layer C containing an ethylene polymer (C) containing 70 mol% or more of a structural unit derived from ethylene.

11. The laminated film according to claim 10, wherein

    the ethylene polymer (A) has a density of 930 kg/m$^3$ to 970 kg/m$^3$, and a melt flow rate of 0.01 g/10 min or more and less than 3 g/10 min as measured at a temperature of 190°C and a load of 21.18 N,
    the ethylene polymer (B) has a density of 930 kg/m$^3$ to 970 kg/m$^3$, and a melt flow rate of 3 g/10 min to 25 g/10 min as measured at a temperature of 190°C and a load of 21.18 N, and a content of the ethylene polymer (B) is 20 wt% to 80 wt% and a content of the inorganic filler is 20 wt% to 80 wt% with respect to a total content of the ethylene polymer (B) and the inorganic filler of 100 wt%, and
    the ethylene polymer (C) has a density of 880 kg/m$^3$ or more and less than 930 kg/m$^3$, and a melt flow rate of 0.01 g/10 min or more and less than 3 g/10 min as measured at a temperature of 190°C and a load of 21.18 N.

12. The laminated film according to claim 10 or 11, the laminated film having a content of the ethylene polymer (B) of 20 wt% to 60 wt% and a content of the inorganic filler of 40 wt% to 80 wt% with respect to a total content of the ethylene polymer (B) and the inorganic filler of 100 wt%.

13. The laminated film according to any one of claims 10 to 12, wherein the inorganic filler is one or more compounds selected from the group consisting of hydrotalcite, talc, and fibrous basic magnesium sulfate particles.

14. The laminated film according to any one of claims 10 to 13, wherein

    the layer A has a thickness of 5 μm to 30 μm,
    the layer B has a thickness of 20 μm to 60 μm, and
    the layer C has a thickness of 20 μm to 100 μm.

15. A laminated film comprising, in sequence:

    a layer A' that contains an ethylene-α-olefin copolymer (A') containing 80 mol% or more of a structural unit derived from ethylene and having a density of 930 kg/m$^3$ to 970 kg/m$^3$, and a melt flow rate of 0.01 g/10 min or more and less than 3 g/10 min as measured at a temperature of 190°C and a load of 21.18 N; and
    a layer B' that contains an ethylene-α-olefin copolymer (B') and an inorganic filler, the ethylene-α-olefin copolymer (B') containing 70 mol% or more of a structural unit derived from ethylene, and having a density of 930 kg/m$^3$ to 970 kg/m$^3$, and a melt flow rate of 3 g/10 min to 25 g/10 min as measured at a temperature of 190°C and a load of 21.18 N, and that has a content of the ethylene-α-olefin copolymer (B') of 20 wt% to 60 wt% and a content of the inorganic filler of 40 wt% to 80 wt% with respect to a total content of the ethylene-α-olefin copolymer (B') and the inorganic filler of 100 wt%.

**EP 4 029 695 A1**

## INTERNATIONAL SEARCH REPORT

| | International application No. |
|---|---|
| | PCT/JP2020/028393 |

**A. CLASSIFICATION OF SUBJECT MATTER**
Int. Cl. B32B27/32(2006.01)i, B32B27/20(2006.01)i, C08K3/18(2006.01)i
FI: B32B27/32 E, B32B27/20 Z, C08K3/18

According to International Patent Classification (IPC) or to both national classification and IPC

**B. FIELDS SEARCHED**

Minimum documentation searched (classification system followed by classification symbols)
Int. Cl. B32B1/00-43/00, C08K3/00-13/08, C08L1/00-101/14

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2009-39978 A (DAINIPPON PRINTING CO., LTD.) 26 February 2009, claims, paragraphs [0006], [0032], [0049], [0075]-[0075], examples 3-4, claims, paragraphs [0006], [0032], [0049], [0075]-[0075], examples 3-4 | 1-3, 6-7<br>4-5, 5-15 |
| X<br>A | JP 2017-94713 A (JIANGMEN HUILONG PLASTICS MACHINERY CO., LTD.) 01 June 2017, claims, paragraphs [0019]-[0022], examples, claims, paragraphs [0019]-[0022], examples | 10, 12, 14<br>1-9, 11, 13, 15 |
| X<br>A | JP 2011-78341 A (CI KASEI CO., LTD.) 21 April 2011, claims, paragraphs [0040]-[0051], tables 1, 2, examples, claims, paragraphs [0040]-[0051], tables 1, 2, examples | 10, 14<br>1-9, 11-13, 15 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>11.09.2020 | Date of mailing of the international search report<br>24.09.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2020/028393 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 4-238029 A (MITSUBISHI KASEI VINYL) 26 August 1992, claims, tables 1, 2, 5, 6, examples 1-9, comparative examples 1-10, claims, tables 1, 2, 5, 6, examples 1-9, comparative examples 1-10 | 10, 13<br>1-9, 11-12, 14-15 |

Form PCT/ISA/210 (continuation of second sheet) (January 2015)

**INTERNATIONAL SEARCH REPORT**

Information on patent family members

| | | International application No. |
|---|---|---|
| | | PCT/JP2020/028393 |

| Patent Documents referred to in the Report | Publication Date | Patent Family | Publication Date |
|---|---|---|---|
| JP 2009-39978 A | 26.02.2009 | (Family: none) | |
| JP 2017-94713 A | 01.06.2017 | CN 105365324 A claims, paragraphs [0018]-[0024], examples | |
| JP 2011-78341 A | 21.04.2011 | CN 102029762 A claims, paragraphs [0040]-[0081], tables 1, 2, examples | |
| JP 4-238029 A | 26.08.1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018520908 A
- JP 11322833 A

- JP 9183816 A

**Non-patent literature cited in the description**

- Plastic Resource Circulation Strategy. Ministry of the Environment, May 2019